# EUROPÄISCHE PATENTSCHRIFT

(11) **EP 1 456 533 B1**
(45) Veröffentlichungstag und Bekanntmachung des Hinweises auf die Patenterteilung: **07.10.2009**
(21) Anmeldenummer: 02805290.0
(22) Anmeldetag: 26.11.2002
(51) Int. Cl.: F03B 15/14, E02B 7/20

(54) **VERFAHREN UND ANLAGE ZUM REGELN DES PEGELSTANDES EINER STAUANLAGE**
METHOD AND SYSTEM FOR REGULATING THE LEVEL OF A DAM
PROCEDE ET DISPOSITIF DE REGULATION DU NIVEAU D'UN BARRAGE

(30) Priorität: 20.12.2001 AT 20012001
(43) Veröffentlichungstag der Anmeldung: 15.09.2004
(73) Patentinhaber: Andritz Hydro GmbH, 1141 Wien (AT)
(72) Erfinder: HESS, Günther, 4020 Linz (AT); PANHOLZER, Heinz, 4203 Altenberg (AT)
(74) Vertreter: Schweinzer, Friedrich
(86) Internationale Anmeldenummer: PCT/EP2002/013278
(87) Internationale Veröffentlichungsnummer: WO 2003/054387

(56) Entgegenhaltungen:
- CH-A- 636 736
- US-A- 4 109 160
- US-A- 4 683 718
- US-A- 4 772 157
- US-B1- 6 281 597

## Beschreibung

Die Erfindung betrifft ein Verfahren zum Regeln des Pegelstandes einer Stauanlage, vorzugsweise ein Staudamm oder ein Stauwehr, wobei in der Stauanlage zum Erzeugen elektrischer Energie eine Anzahl von Turbinen-Generator-Einheiten, vorzugsweise mit Leistungen zwischen je 100kW und 1000kW, angeordnet sind, die zumindest abschnittsweise übereinander und/oder nebeneinander angeordnet und miteinander zu einem oder mehreren Turbinen-Generator-Modulen verbunden sind, sowie eine Anlage zum Regeln des Pegelstandes einer Stauanlage mit einer Mehrzahl von Turbinen-Generator-Einheiten, die übereinander und/oder nebeneinander angeordnet und miteinander zu einem oder mehreren Turbinen-Generator-Modulen verbunden sind und gegebenenfalls eine vorbestimmte Anzahl von Turbinen-Generator-Modulen nebeneinander angeordnet und an der Stauanlage abgestützt sind.

Einrichtungen zur Erzeugung elektrischer Energie, bei welchen mehrere kleinere Turbinen-Generatoreinheiten in Reihen und Spalten nebeneinander und übereinander in einem Rahmen oder einer versteiften Konstruktion angeordnet sind, sind beispielsweise aus der WO98/11343, der US 6,281,597 B1 oder der US 4,804,855 A bekannt. Solche Einrichtungen werden aufgrund ihrer besonders kurzen Bauweise und großen Anströmfläche vorzugsweise an Stauanlagen, wie Schleusen, Wehren, Dämmen od. dgl., verwendet, um die gewöhnlicher Weise ungenutzt durchfließende Wassermenge zur Erzeugung elektrischer Energie zu nutzen. Bei solche Stauanlagen muss jedoch der Wasserpegel geregelt werden, um die je nach Anwendung erforderliche Funktion der Stauanlage erfüllen zu können. Zum Beispiel benötigt der Schiffsverkehr auf einem Fluss einen bestimmten Wasserpegel, oder ein Bewässerungsdamm muss einen Mindestwasserpegel aufweisen, um die Bewässerung gewährleisten zu können. Dazu wurden bisher Wehranlage ganz oder teilweise geöffnet.

Ebenso sind bereits Regelungen von Wasserkraftanlagen bekannt, wobei diese Regelungen die Maximierung oder die Optimierung der erzeugten Energie anstreben. Dazu sind die Turbinen solcher Wasserkraftanlagen mit kontinuierlich einstellbaren Regeleinrichtungen, wie z.B. Leitschaufeln, ausgestattet, um den Volumenstrom durch die Turbine und damit die erzeugte Leistung kontinuierlich regeln zu können.
Die US 4,683,718 A zeigt eine solche Regelung für eine Anlage mit einer Anzahl von Turbinen, wobei eine Anzahl von Turbinen ohne Regeleinrichtung und eine Anzahl mit Regeleinrichtung vorhanden ist, um die verfügbare Wassermenge optimal nutzen zu können. Die Regelung ist dabei auf die Optimierung der elektrischen Leistung ausgerichtet und nicht auf die Einhaltung eines vorgegebenen Pegelstandes. Die US 4,109,160 A zeigt zwar eine Regelung eines Pegelstandes eines Zwischenwasserspeichers eines Pumpspeicherkraftwerks, allerdings erfolgt die Regelung wieder ausschließlich kontinuierlich mittels entsprechenden Leitschaufeln der beteiligten Turbinen.

Die Erfindung hat sich nun die Aufgabe gestellt, ein Verfahren zur Regelung des Pegelstandes einer Stauanlage anzugeben, dass die vorhandenen Möglichkeiten und bauliche Gegebenheiten weitestgehend ausnützt, die Funktion der Stauanlage sicherstellt und eine einfache und genaue Regelung ermöglicht.

Diese Aufgabe wird erfindungsgemäß dadurch gelöst, dass der Pegelstand zumindest teilweise durch das Zu- bzw. Wegschalten von einzelnen oder mehreren Turbinen-Generator-Einheiten oder Turbinen-Generator-Modulen auf einen vorgebbaren Sollwert geregelt wird, wobei eine Durchflussmenge durch die Stauanlage in diskreten Schritten eingestellt wird und ein diskreter Schritt der durch eine bzw. mehrere Turbinen-Generator-Einheit fließbaren Durchflussmenge entspricht.
Diese Turbinen-Generator-Einheiten oder Turbinen-Generator-Module haben einen genau bekannten Durchfluss, wodurch die abfließende Durchflussmenge genau bestimmt werden kann. Die abfließende Durchflussmenge und folglich auch der Pegelstand der Stauanlage kann deshalb mittels der einzelnen Turbineneinheiten in kleinen diskreten Schritten sehr einfach und genau geregelt werden. Es ist somit nur mehr in Ausnahmesituationen notwendig, die in der Regel sehr großen, schweren und schlecht regelbaren Wehranlagen zu öffnen bzw. zu schließen.
Die Regelung wird dadurch flexibler, da dadurch die Regelung in kleinen Schritten ermöglicht wird und erlaubt darüber hinaus eine rasche Reaktion auf sich ändernde Bedingungen an der Stauanlage. Weiters lässt sich dadurch der Pegelstand hinsichtlich bestimmter Kriterien sehr einfach optimieren.

Die zur Regelung des Pegelstandes verwendeten Turbinen-Generator-Einheiten oder Turbinen-Generator-Module können konstruktiv sehr einfach ausgeführt werden, wenn diese Einheiten bzw. Module bei im wesentlichen konstanter Durchflussmenge bzw. mit konstanter Leistung betrieben werden, da dann keine Einrichtung zur Regulierung der Durchflussmenge bzw. der Leistung vorgesehen werden muss. Die Einheiten bzw. Turbinen haben somit nur zwei Betriebspunkte, nämlich in Betrieb oder außer Betrieb, was auch die Regelung erheblich vereinfacht.

Wenn der Pegelstand zumindest teilweise durch das Öffnen bzw. Schließen zumindest einer Wehranlage geregelt wird, kann in gewissen Situationen die abfließende Durchflussmenge rasch erhöht werden. Dies ist vor allem als Sicherheitsmaßnahme sinnvoll, in Situationen, wo der Durchfluss durch die Turbineneinheiten nicht mehr ausreicht, um die zufließenden Wassermengen wieder abzubauen, oder wo der Abfluss von der Stauanlage rasch verringert werden muss.

Es ist besonders vorteilhaft, einen oberen Turbinenschaltpegel bzw. Alarmpegel vorzugeben, bei dessen Erreichen Turbinen-Generator-Einheiten oder Turbinen-Generator-Module zugeschalten und/oder Wehranlagen geöffnet werden.
Es ist gleichfalls vorteilhaft, beim Erreichen eines vorgegebenen unteren Turbinenschaltpegels bzw. Alarmpegels Turbinen-Generator-Einheiten oder Turbinen-Generator-Module wegzuschalten und/oder Wehranlagen zu schließen.
Dadurch wird die Einhaltung der geforderten Grenzwerte für den Pegel sichergestellt und gleichzeitig die Anzahl der Schalthandlungen der Turbineneinheiten reduziert.

Die Erzeugung von elektrischer Energie durch die Turbineneinheiten kann maximiert werden, wenn zuerst alle Turbinen-Generator-Einheiten oder Turbinen-Generator-Module zugeschaltet werden und erst danach Wehranlage geöffnet werden. Ebenso erreicht man eine Maximierung der Erzeugung von elektrischer Energie, wenn zuerst alle Wehranlagen geöffnet werden und erst danach Turbinen-Generator-Einheiten oder Turbinen-Generator-Module weggeschaltet werden. Durch diese Maßnahmen wird der Durchfluss durch die Turbineneinheiten maximiert, was sich direkt positiv auf die erzeugte Energiemenge auswirkt.

Es ist ganz besonders vorteilhaft, wenn beim Erreichen eines vorgegebenen Turbinenschaltpegels und/oder Alarmpegels ein Alarmsignal erzeugt und/oder angezeigt wird, da dann unmittelbar und ohne Zeitverzögerung auf die aktuelle kritische Situation reagiert werden kann. Diese Alarmsignale können z.B. akustischer und/oder optischer Natur sein.

Wenn durch das Auslösen eines Alarms automatische Schalthandlungen zum Zu- oder Wegschalten von Turbinen-Generator-Einheiten oder Turbinen-Generator-Module und/oder Öffnen oder Schließen von Wehranlagen eingeleitet werden, kann die Regelung des Pegelstandes weitestgehend automatisch, ohne erforderliches Bedienpersonal vor Ort erfolgen.

Durch das Erstellen von Vorhersagen über künftig zu erwartende Pegelstände und das damit einhergehende Öffnen und Schließen von Turbinen-Generator-Einheiten oder Turbinen-Generator-Module und/oder Wehranlagen anhand dieser Vorhersagen kann bereits vorausschauend auf zu erwartende große Pegeländerungen reagiert werden, wodurch die Schalthäufigkeit der Wehranlagen verringert werden kann.

Wenn die Regelungen der Pegelstände mehrerer hintereinanderfolgender Stauanlagen miteinander gekoppelt werden und die einzelnen Stauanlagen von einer übergeordneten Regelung so geregelt werden, dass die Pegelstände dieser Stauanlagen unter gegenseitiger Rücksichtnahme optimiert werden, so kann weit über eine einzige Stauanlage hinaus, entlang einer langen Strecke des Wasserlaufes, ein optimaler Pegelstand erreicht werden. Dadurch wird Häufigkeit Turbineneinheiten zu- bzw. wegzuschalten reduziert und gleichzeitig kann eine über einen längeren Zeitraum gleichmäßigere Energieerzeugung erreicht werden.

Eine weitere vorteilhafte Erweiterung des Regelkonzeptes kann erzielt werden, wenn die Anzahl der zu- bzw. wegzuschaltenden Turbinen-Generator-Einheiten oder Turbinen-Generator-Module vorab ermittelt werden und gleichzeitig zu- bzw. weggeschalten werden, da dann die zur Korrektur des Pegelstandes erforderlichen Schalthandlungen in einem Zug durchgeführt werden können.
Günstig ist es, die Anzahl der zu- bzw. wegzuschaltenden Turbinen-Generator-Einheiten oder Turbinen-Generator-Module anhand des aktuellen Energiebedarfs und eventuell auch anhand eines künftig zu erwartenden Pegelstandes zu ermitteln, wodurch man eine optimale Auslastung, hinsichtlich des Energiebedarfs, der Einheiten bzw. Module erreicht.

Ganz besonders vorteilhaft ist es, die Regelungen der Pegelstände hinsichtlich der Energieerzeugung zu optimieren. Die Optimierung wird sehr vorteilhaft mit Hilfe eines mathematischen Modells durchgeführt, das zur Verbesserung der Optimierungsergebnisse bestimmte Zustände und Randbedingungen, wie z.B. das vorübergehende Öffnen bzw. Schließen von Wehren, Dämmen, Schleusen und gegebenenfalls das Anheben von Turbinen-Generator- bzw. Turbinen-Generator-Module, Eingaben des Bedienpersonals, gespeicherte Erfahrungswerte, physikalische Gesetzmäßigkeiten, wie z.B. die verdunstende oder versickernde Wassermenge, etc., und aktuelle bzw. vorausschauende meteorologische Daten, wie z.B. zu erwartende Regenfälle, Temperaturvorhersagen, etc., berücksichtigt. Weiters kann sehr vorteilhaft anhand des mathematischen Modells unter Berücksichtigung des aktuellen und/oder zu erwartenden Zu- bzw. Abflusses und des aktuellen und/oder zu erwartenden Energiebedarfs die optimale Anzahl der zu- bzw. wegzuschaltenden Turbinen-Generator-Einheiten bzw. Turbinen-Generator-Module ermittelt werden.
Als Sollwert für die Regelung wird in vorteilhafter Weise der Pegelstand über einen vorbestimmten Zeitraum, wie etwa ein Jahr, herangezogen.
Die zu erzeugende Energie kann über einen bestimmten Zeitbereich, vorzugsweise einem Tag, vorgegeben werden und der Pegelstand so geregelt werden, dass der vorgegebene Energieerzeugungsverlauf möglichst genau eingehalten werden kann. Dadurch erreicht man unter Gewährleistung der eigentlichen Funktion der Stauanlage eine optimale Ausnutzung der Energiegewinnung. Gleichzeitig wird dadurch sichergestellt, dass die Ressourcen der Stauanlage weitestgehend ausgenutzt werden.

Wenn die Pegelstände einer oder mehrerer Stauanlagen von einem zentralen Kontrollzentrum aus geregelt werden können zusätzlich Überwachungs- und Kontrolleinrichtungen vor Ort eingespart werden, was sich sehr positiv auf die Kosten aufwirkt.

Wird der Sollwert für den Pegelstand für einen Zweck, der nicht der Energiegewinnung dient, vorgegeben wird, z.B. für Schifffahrt, Bewässerung, etc., wird der ursprünglich gedachte Betrieb der Stauanlage nicht beeinträchtig. Die Energiegewinnung ist dann ein zusätzlicher Vorteil, der ohne Einschränkungen des Betriebes erzielt werden kann.

In der Praxis erweist es sich als vorteilhaft, wenn an einer Stauanlage zumindest 10, vorzugsweise 20 bis 500, zu- bzw. wegschaltbare Turbinen-Generator-Einheiten eingesetzt werden.

Es ist weiters sehr vorteilhaft, wenn die Stauanlage eine Mehrzahl von Pfeilern aufweist, zwischen welchen das Medium vorbeiströmen kann, wobei zwischen zwei benachbarten Pfeilern eine vorbestimmte Anzahl von Turbinen-Generator-Einheiten oder Turbinen-Generator-Module angeordnet und an den Pfeilern abgestützt sind. Dadurch können bereits bestehende Strukturen der Stauanlage direkt für eine Nachrüstung verwendet werden und es sind keine aufwendigen Umbauarbeiten notwendig.

Eine sehr kompakte Ausführungsvariante erhält man, indem die Einrichtung zum Zu- bzw. Wegschalten von Turbinen-Generator-Einheiten oder Turbinen-Generator-Modulen in den Einheiten oder Modulen integriert werden und über die Einheit oder das Modul an den Pfeilern abgestützt werden. Dadurch minimiert man auch die notwendigen baulichen Maßnahmen an der Stauanlage. Eine weitere Variante sieht vor, dass die Einrichtung zum Zu- bzw. Wegschalten von Turbinen-Generator-Einheiten oder Turbinen-Generator-Modulen direkt an den Pfeilern abgestützt ist.

Die Turbinen-Generator-Einheiten oder Turbinen-Generator-Module können sehr einfach aus ihrer Arbeitsposition entfernt werden, z.B. zu Wartungsarbeiten oder zum Freigeben des Strömungsquerschittes in gewissen Situationen, wenn diese heb- und senkbar angeordnet sind.

Ein ganz besonders vorteilhafte Anwendung findet die erfindungsgemäße Regelung des Pegelstandes einer Stauanlage bei einem Trinkwasserreservoir, einem Bewässerungsdamm, einem Hochwasserrückhaltebecken, einem Damm zu Regulierung eines Schifffahrtsweges oder einer Staustufe eines Flusskraftwerkes.

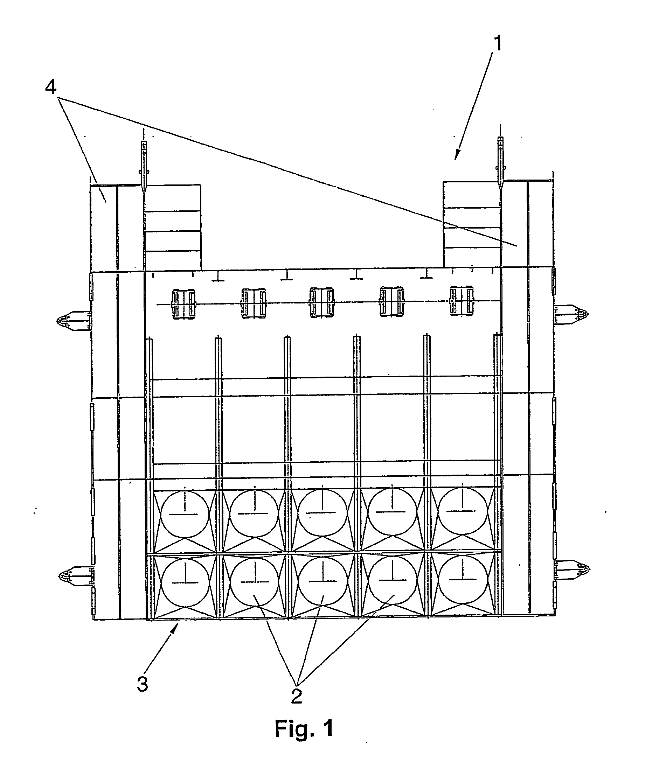

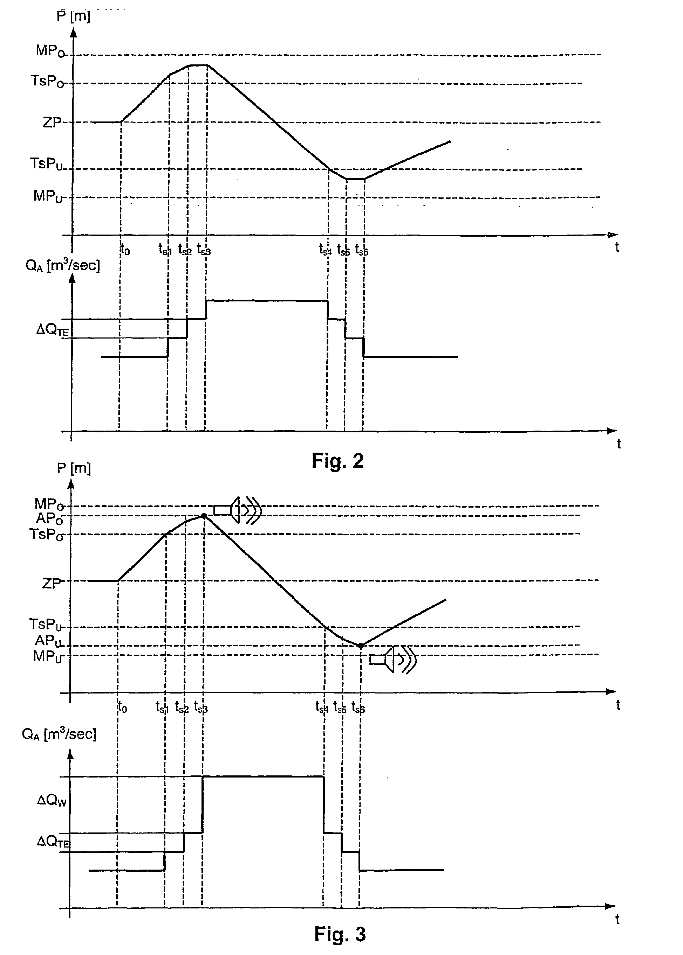

Die vorliegende Erfindung wird anhand der beispielhaften, vereinfachten und nicht einschränkenden Figuren 1 und 2 beschrieben. Dabei zeigt
- Fig. 1: eine Vorderansicht einer Stauanlage mit Turbinen-Generator-Einheiten,
- Fig. 2: das Grundprinzip der erfindungsgemäßen Regelung und
- Fig. 3: ein erweitertes Regelungskonzept.

Die Fig. 1 zeigt schematische und vereinfacht eine Stauanlage 1, z.B. ein Staudamm, zum Stauen einer Flüssigkeit, vorzugsweise Wasser in einem Flusslauf, mit in diesem Ausführungsbeispiel zwei Pfeilern 4, zwischen denen eine Anzahl von Turbinen-Generator-Einheiten 2, hier zehn, angeordnet sind. Diese Turbinen-Generator-Einheiten 2 werden dabei von den Pfeilern 4 abgestützt und gehalten. Die Turbinen-Generator-Einheiten 2 sind zu einem Turbinen-Generator-Modul 3 zusammengefasst und können bei Bedarf als ein Modul mit einer nicht dargestellten Hebeeinrichtung aus der Stauanlage 1 herausgehoben werden. Weiters kann die Stauanlage 1 eine nicht dargestellte Wehranlage umfassen, mit der der Abfluss des Mediums von der Stauanlage 1 ganz oder teilweise freigegeben oder unterbunden werden kann.
Die Turbinen-Generator-Einheiten 2 können in an sich hinlänglich bekannter Weise, beispielsweise durch einen Saugrohrverschluss, wie ein Schot oder eine Irisblende, einzeln, oder in Gruppen, wie beispielsweise der gesamte Turbinen-Generator-Modul 3, abgeschottet werden, sodass durch die Turbinen-Generator-Einheiten 2 kein Wasser fließen kann und folglich von diesen Einheiten kein elektrischer Strom erzeugt wird.

Es ist selbstverständlich, dass eine solche Stauanlage auch mehr als zwei Pfeiler umfassen kann und dass zwischen zwei Pfeilern mehr als die in Fig. 1 dargestellten Turbinen-Generator-Einheiten 2 angeordnet werden können. In der Praxis ist es durchaus denkbar in einer Stauanlage eine beliebige Anzahl solcher Turbinen-Generator-Einheiten 2, vorzugsweise 20 bis 500, zu integrieren.
Solche Turbinen-Generator-Einheiten 2 können natürlich auch in beliebigen anderen als in Fig. 1 beschriebenen Stauanlagen, wie Trinkwasserreservoirs, Bewässerungsdämme, Hochwasserrückhaltebecken, etc., verwendet werden, wobei das nachfolgend beschriebene Regelkonzept für den Pegelstand jedoch gleicher Art angewendet werden kann.

Im folgenden wird anhand der Fig. 2, das Grundprinzip des erfindungsgemäßen Regelungskonzepts des Pegelstandes einer beliebigen Stauanlage mit integrierten Turbinen-Generator-Einheiten 2 erörtert. In Fig. 2 sind zwei Diagramme dargestellt, das erste zeigt den Wasserpegel P über die Zeit t und das zweite die von der Stauanlage abfließende Durchflussmenge Q_{A} über die Zeit t. Für die Stauanlage wird, beispielsweise vom Betreiber, ein Zielpegel ZP vorgegeben. Der aktuelle Pegel P darf nun innerhalb ebenfalls vorgegebener oberer und unterer Turbinenschaltpegel TsP_{O}, TsP_{U} variieren. Diese Pegel ergeben sich aus den Anforderungen an die Stauanlage, z.B. benötigt der Schiffsverkehr auf einem Fluss bestimmte minimale und maximale Wasserstände. Weiters sind für die Stauanlage obere und untere Maximalpegel MP_{O}, MP_{U} festgelegt, die nicht über- bzw. unterschritten werden dürfen. Sollten diese Maximalpegel in Ausnahmesituationen dennoch über- bzw. unterschritten werden, können je nach Stauanlage gewisse Notmaßnahmen, z.B. das Absperren oder Öffnen weiterer stromaufwärtsgelegener Stauanlagen, das Öffnen vorhandener Notschleusen, das Herausheben der Turbinen-Generator-Einheiten 2 bzw. - Module 3, etc., eingeleitet werden.
Ausgangspunkt der Beschreibung des Regelverfahrens ist ein Zustand, in dem die Zufluss- und die Abflussmengen gleiche groß sind und sich der Pegel P nicht ändert. In diesem Zustand sind bereits eine beliebige Anzahl von Turbinen-Generator-Einheiten 2 oder Turbinen-Generator-Module 3 geöffnet, sodass durch diese Einheiten ebenfalls eine gewisse Wassermenge Q_{A} abfließt und elektrische Energie erzeugt wird.
Zum Zeitpunkt t₀ steigt nun der Pegel P der Stauanlage, z.B. auf Grund von Regenfällen, ausgehend vom Zielpegel ZP an und erreicht zum Zeitpunkt tₛ₁ den oberen Turbinenschaltpegel TsP_{O}. Spätestens zu diesem Zeitpunkt tₛ₁ wird automatisch oder durch das Bedienpersonal eine oder mehrere weitere einzelne Turbinen-Generator-Einheiten 2 oder Turbinen-Generator-Module 3 zugeschaltet, um die abfließende Durchflussmenge Q_{A} zu erhöhen. Gleichzeitig wird dadurch, sozusagen als Nebeneffekt, mehr elektrische Energie erzeugt. Diese Erhöhung der Abflussmenge ist eine diskreter Zuwachs ΔQ_{TE}, bzw. ein Vielfaches davon, und entspricht genau jener Wassermenge, die durch die Turbinen-Generator-Einheit oder Turbinen-Generator-Module fließbar ist. Da der Pegel P weiter zunimmt, werden zu den Zeitpunkten tₛ₁ und tₛ₃ weitere Turbinen-Generator-Einheiten 2 oder Turbinen-Generator-Module 3 zugeschaltet, wodurch die abfließende Durchflussmenge Q_{A} weiter diskret um jeweils ΔQ_{TE}, bzw. einem Vielfachen davon, erhöht wird. Dies wird solange wiederholt, bis der obere Turbinenschaltpegel TsP_{O} wieder unterschritten wird.
Sollten bereits alle Turbinen-Generator-Einheiten 2 oder Turbinen-Generator-Module 3 zugeschaltet worden sein und der Pegel P weiter steigt, so können noch eventuell vorhandene Wehranlagen geöffnet werden, wodurch die abfließende Durchflussmenge Q_{A} weiter erhöht wird. Wehranlagen sollten prinzipiell erst dann geöffnet werden, wenn bereits alle Turbinen-Generator-Einheiten 2 oder Turbinen-Generator-Module 3 zugeschaltet sind, da dann die Erzeugung von elektrischer Energie natürlich maximiert werden kann. Allerdings ist es selbstverständlich auch denkbar aus bestimmten Gründen die Wehranlagen bereits zu einem früheren Zeitpunkt zu öffnen.
Wie Fig. 2 weiters entnommen werden kann erreicht der nun fallende Pegel P zum Zeitpunkt tₛ₄ den unteren Turbinenschaltpegel TsP_{U}, womit die umgekehrte Vorgangsweise beginnt. Sukzessive werden automatisch oder durch das Bedienpersonal Turbinen-Generator-Einheiten 2 oder Turbinen-Generator-Module 3 weggeschaltet, bis sich der Pegel P wieder innerhalb der beiden Grenzwerte, oberer und unterer Turbinenschaltpegel TsP_{O}, TsP_{U}, befindet.
Selbstverständlich ist es auch denkbar anhand des Pegelzuwachses bzw. der Pegelabnahme, anhand von Erfahrungswerten oder anhand von mathematischen oder simulatorischen Modellen die erforderliche Anzahl der zuzuschaltenden bzw. wegzuschaltenden Turbinen-Generator-Einheiten 2 bzw. Turbinen-Generator-Module 3 zu bestimmen und diese gleichzeitig zu öffnen bzw. schließen.
Solange sich der Pegel P innerhalb der beiden Grenzwerte befindet werden in der Regel keine Schalthandlungen vorgenommen, sodass die abfließende Durchflussmenge Q_{A} in diesem Zeitraum im Wesentlichen konstant bleibt.
In diesem Ausführungsbeispiel werden vereinfacht nur drei Turbinen-Generator-Einheiten 2 oder Turbinen-Generator-Module 3 zugeschaltet. In der Praxis sind in einer Stauanlage jedoch 20 und mehr einzeln schaltbare Turbinen-Generator-Einheiten 2 oder Turbinen-Generator-Module 3 integriert, wodurch eine sehr feine Regelung des Wasserpegels P der Stauanlage erreicht werden kann.
Beim Erreichen des oberen bzw. unteren Turbinenschaltpegels TsP_{O}, TsP_{U} kann weiters auch ein Alarm ausgelöst werden, der z.B. in einem Kontrollzentrum oder durch ein akustisches Signal angezeigt wird und das Bedienpersonal auf die vorliegende Situation aufmerksam macht, oder eine automatische Schalthandlung auslöst.

Die Fig. 3 zeigt nun ein erweitertes Regelkonzept. Zusätzlich zu den bereits aus Fig. 2 bekannten Grenzpegeln werden nun noch ein oberer und unterer Alarmpegel AP_{O}, AP_{U} vorgegeben. Diese Pegel werden in Praxis knapp, z.B. 5cm, unterhalb bzw. oberhalb der oberen und unteren Maximalpegel MP_{O}, MP_{U} liegen
Wie bereits bei Fig. 2 beschrieben, steigt der Pegel P ab dem Zeitpunkt tₛ₀ an und erreicht zum Zeitpunkt tₛ₃. nach zwei Schalthandlungen zu den Zeitpunkten tₛ₁ und tₛ₂, den oberen Alarmpegel AP_{O}. Die Stauanlage ist in idealer Weise so ausgelegt, dass zu diesem Zeitpunkt tₛ₃ bereits alle Turbinen-Generator-Einheiten 2 oder Turbinen-Generator-Module 3 zugeschaltet sind, sodass der maximale Durchfluss durch die Turbinen und somit auch die maximale Energieerzeugung erreicht ist. Zu diesem Zeitpunkt tₛ₃ wird in diesem Beispiel ein akustischer Alarm erzeugt, um z.B. das Bedienpersonal auf den kritischen Pegel P aufmerksam zu machen. Dieser akustische Alarm kann natürlich auch mit einer automatischen Schalthandlung gekoppelt sein. Nun werden noch eventuell vorhanden Wehranlagen geöffnet, wodurch die abfließende Durchflussmenge Q_{A} um ΔQ_{W} der Wehranlage erhöht wird und der Pegel P wieder zu sinken beginnt. Als weitere Maßnahme zur Senkung des Pegels P kann auch das Herausheben der gesamten Turbinen-Generator-Einheiten 2 oder Turbinen-Generator-Module 3 vorgesehen werden.
Der nun sinkende Pegel P erreicht zum Zeitpunkt tₛ₄ den unteren Turbinenschaltpegel TsP_{U}. Falls zu diesem Zeitpunkt noch Wehranlagen geöffnet sind oder noch nicht alle eventuell herausgehobenen Turbinen-Generator-Einheiten 2 oder Turbinen-Generator-Module 3 in ihre Arbeitsposition abgesenkt worden sind, so sollten zuerst diese geschlossen bzw. abgesenkt werden, bevor Turbinen-Generator-Einheiten 2 oder Turbinen-Generator-Module 3 weggeschaltet werden, um die Energieerzeugung zu maximieren. In diesem Beispiel wird zum Zeitpunkt tₛ₄ zuerst eine Wehranlage und in weiterer Folge zum Zeitpunkt tₛ₅ eine Turbinen-Generator-Einheit 2 oder ein Turbinen-Generator-Modul 3 weggeschaltet. Zum Zeitpunkt tₛ₆ wird nun der untere Alarmpegel AP_{U} erreicht, wiederum ein akustischer Alarm ausgelöst und zumindest eine weitere Turbinen-Generator-Einheit 2 oder ein weiterer Turbinen-Generator-Modul 3 weggeschaltet, sodass der Pegel P wieder eine ansteigende Tendenz zeigt. Natürlich könnte man im Zeitpunkt tₛ₆ wenn notwendig auch gleichzeitig mehrere oder sogar alle noch aktiven Turbinen-Generator-Einheiten 2 oder Turbinen-Generator-Modulen 3 wegschalten.

Die oben beschriebenen Beispiele basieren jeweils auf aktuellen Messungen des Pegelstandes bzw. der Pegelstandsänderung. Es ist jedoch auch denkbar, Prognosen über zukünftige Pegelstände abzugeben, indem z.B. Pegelstände stromaufwärtsliegender Stauanlagen, Wetterlagen, Erfahrungswerte, etc. berücksichtigt werden, und anhand dieser Prognosen vorausschauend die abfließende Durchflussmenge Q_{A} durch das Zu- bzw. Wegschalten von einzelnen Turbinen-Generator-Einheiten 2 oder Turbinen-Generator-Modulen 3 so zu regeln, dass der Pegel P möglichst innerhalb des oberen und unteren Turbinenschaltpegels TsP_{O}, TsP_{U} liegt und diese wenn möglich nicht über- bzw. unterschreitet.

Der Energiebedarf variiert sehr stark über einen gewissen Zeitraum. Beispielsweise wird am Tag mehr Energie verbraucht wie abends, oder im Winter mehr Energie verbraucht wie im Sommer. Das Verfahren lässt sich nun besonders vorteilhaft anwenden, wenn der Pegel P auch hinsichtlich der über einen Zeitraum unterschiedlichen Anforderungen an die Energieerzeugung optimiert wird. Z.B. können über die Nacht alle überflüssigen Turbinen-Generator-Einheiten 2 oder Turbinen-Generator-Modulen 3 weggeschaltet werden. Dadurch steigt der Pegel P über die Nacht, der dann in Folge zu den Energiebedarfsspitzenzeiten des Tages wieder durch die Turbinen-Generator-Einheiten 2 oder Turbinen-Generator-Modulen 3 zur Energieerzeugung abgebaut werden kann.
Gleichfalls könnte man den Pegel P im Winter generell auf einem hohen Niveau halten, um die Abdeckung von Energiebedarfsspitzen unterstützen zu können.
Gleichfalls könnte man den Pegel auch generell immer auf höchstem Niveau halten, damit die Energieerzeugung immer möglichst hoch ist.

Die Optimierung erfolgt mittels eines mathematischen Modells der Stauanlage 1, in das bei Bedarf auch bestimmte andere Randbedingungen, wie z.B. das vorübergehende Öffnen bzw. Schließen zusätzlicher Wehranlagen, Eingaben des Bedienpersonals oder meteorologische Daten, eingebunden werden können. Gleichzeitig können mit dem mathematischen Modell bei Bedarf auch bestimmte Parameter, wie z.B. die optimale Anzahl der zu öffnenden bzw. zu schließenden Turbinen-Generator-Einheiten 2 oder Turbinen-Generator-Modulen 3 und/oder Wehranlagen ermittelt werden.

Sinnvoller Weise werden die Pegel P einer oder mehrerer Stauanlagen 1 von einem zentralen Kontrollzentrum aus geregelt. Dazu werden notwendige Daten bzgl. der Pegelstände P zum Kontrollzentrum übermittelt, beispielsweise über ein Modem oder per Funk, und einem Regelalgorithmus, der vorzugsweise auf einem Computer implementiert ist, zugeführt. Vom Kontrollzentrum werden dann die erforderlichen Steuersignale, vornehmlich Befehle zum Öffnen bzw. Schließen von Turbinen-Generator-Einheiten 2 oder Turbinen-Generator-Modulen 3, zur Stauanlage zurückgeliefert.

## Patentansprüche

1. Verfahren zum Regeln des Pegelstandes (P) einer Stauanlage (1), vorzugsweise ein Staudamm oder ein Stauwehr, wobei in der Stauanlage (1) zum Erzeugen elektrischer Energie eine Anzahl von Turbinen-Generator-Einheiten (2), vorzugsweise mit Leistungen zwischen je 100kW und 1000kW, angeordnet sind, die zumindest abschnittsweise übereinander und/oder nebeneinander angeordnet und miteinander zu einem oder mehreren Turbinen-Generator-Modulen (3) verbunden sind und wobei der Pegelstand (P) durch das Zu- bzw. Wegschalten von einzelnen bzw. mehreren Turbinen-Generator-Einheiten (2) eines Turbinen-Generator-Moduls (3) und/oder von Turbinen-Generator-Modulen (3) auf einen vorgebbaren Sollwert geregelt wird, wobei eine Durchflussmenge durch die Stauanlage in diskreten Schritten eingestellt wird und ein diskreter Schritt der durch eine bzw. mehrere Turbinen-Generator-Einheit (2) fließbaren Durchflussmenge entspricht.

2. Verfahren nach Anspruch 1, **dadurch gekennzeichnet, dass** die zugeschaltenen Turbinen-Generator-Einheiten (2) bei im wesentlichen konstanter Durchflussmenge bzw. mit konstanter Leistung betrieben werden.

3. Verfahren nach Anspruch 1 oder 2, **dadurch gekennzeichnet, dass** der Pegelstand (P) zumindest teilweise durch das Öffnen bzw. Schließen zumindest einer zusätzlichen Wehranlage geregelt wird.

4. Verfahren nach einem der Ansprüche 1 bis 3, **dadurch gekennzeichnet, dass** beim Erreichen eines vorgegebenen oberen Turbinenschaltpegels (TsP_{O}) Turbinen-Generator-Einheiten (2) oder Turbinen-Generator-Module (3) zugeschalten und/oder Wehranlagen geöffnet werden.

5. Verfahren nach einem der Ansprüche 1 bis 4, **dadurch gekennzeichnet, dass** beim Erreichen eines vorgegebenen oberen Alarmpegels (AP_{O}) eine Wehranlage geöffnet wird und/oder Turbinen-Generator-Einheiten (2) oder Turbinen-Generator-Module (3) zugeschaltet werden.

6. Verfahren nach Anspruch 4 oder 5, **dadurch gekennzeichnet, dass** zuerst alle Turbinen-Generator-Einheiten (2) oder Turbinen-Generator-Module (3) zugeschaltet werden und erst danach Wehranlagen geöffnet werden.

7. Verfahren nach einem der Ansprüche 1 bis 6, **dadurch gekennzeichnet, dass** beim Erreichen eines vorgegebenen unteren Turbinenschaltpegels (TsP_{U}) Turbinen-Generator-Einheiten (2) oder Turbinen-Generator-Module (3) weggeschalten und/oder Wehranlagen geschlossen werden.

8. Verfahren nach einem der Ansprüche 1 bis 7, **dadurch gekennzeichnet, dass** beim Erreichen eines vorgegebenen unteren Alarmpegels (AP_{U}) Wehranlagen geschlossen werden und/oder Turbinen-Generator-Einheiten (2) oder Turbinen-Generator-Module (3) weggeschaltet werden.

9. Verfahren nach Anspruch 7 oder 8, **dadurch gekennzeichnet, dass** zuerst alle Wehranlagen geschlossen werden und erst danach Turbinen-Generator-Einheiten (2) oder Turbinen-Generator-Module (3) weggeschaltet werden.

10. Verfahren nach einem der Ansprüche 4 bis 9, **dadurch gekennzeichnet, dass** beim Erreichen eines vorgegebenen Turbinenschaltpegels (TsP_{O}, TsP_{U}) und/oder Alarmpegels (AP_{O}, AP_{U}) ein Alarmsignal, vorzugsweise ein akustisches oder optisches, erzeugt und/oder angezeigt wird.

11. Verfahren nach Anspruch 10, **dadurch gekennzeichnet, dass** durch das Auslösen eines Alarms automatische Schalthandlungen zum Zu- oder Wegschalten von Turbinen-Generator-Einheiten (2) oder Turbinen-Generator-Module (3) und/oder Öffnen oder Schließen von Wehranlagen eingeleitet werden.

12. Verfahren nach einem der Ansprüche 1 bis 11, **dadurch gekennzeichnet, dass** eine Vorhersage über einen künftig zu erwartenden Pegelstand (P) erstellt wird und dass abhängig von dieser Vorhersage Turbinen-Generator-Einheiten (2) oder Turbinen-Generator-Module (3) zu- bzw. weggeschalten und/oder Wehranlagen geöffnet bzw. geschlossen werden.

13. Verfahren nach einem der Ansprüche 1 bis 12, **dadurch gekennzeichnet, dass** die Regelung der Pegelstände (P) mehrerer hintereinanderfolgender Stauanlagen (1) miteinander gekoppelt werden und von einer übergeordneten Regelung so geregelt werden, dass die Pegelstände (P) dieser Stauanlagen unter gegenseitiger Rücksichtnahme optimiert werden.

14. Verfahren nach einem der Ansprüche 1 bis 13, **dadurch gekennzeichnet, dass** die Anzahl der zu- bzw. wegzuschaltenden Turbinen-Generator-Einheiten (2) oder Turbinen-Generator-Module (3) vorab ermittelt werden und im Wesentlichen gleichzeitig zu- bzw. weggeschalten werden.

15. Verfahren nach Anspruch 14, **dadurch gekennzeichnet, dass** die Anzahl der zu- bzw. wegzuschaltenden Turbinen-Generator-Einheiten (2) bzw. Turbinen-Generator-Module (3) anhand des aktuellen Energiebedarfs ermittelt werden.

16. Verfahren nach Anspruch 12 und Anspruch 14, **dadurch gekennzeichnet, dass** die Anzahl der zu- bzw. wegzuschaltenden Turbinen-Generatoreinheiten bzw. Module anhand eines künftig zu erwartenden Pegelstandes (P) und eines künftig zu erwartenden Energiebedarfs ermittelt werden.

17. Verfahren nach einem der Ansprüche 1 bis 16, **dadurch gekennzeichnet, dass** die Regelungen des Pegelstandes (P) hinsichtlich der Energieerzeugung optimiert wird.

18. Verfahren nach Anspruch 17, **dadurch gekennzeichnet, dass** die Optimierung der Energieerzeugung mit Hilfe eines mathematischen Modells durchgeführt wird.

19. Verfahren nach Anspruch 18, **dadurch gekennzeichnet, dass** anhand des mathematischen Modells unter Berücksichtigung des aktuellen und/oder zu erwartenden Zu- bzw. Abflusses und des aktuellen und/oder zu erwartenden Energiebedarfs die optimale Anzahl der zu- bzw. wegzuschaltenden Turbinen-Generator-Einheiten (2) bzw. Turbinen-Generator-Module (3) ermittelt wird.

20. Verfahren nach Anspruch 19, **dadurch gekennzeichnet, dass** anhand des mathematischen Modells das vorübergehende Öffnen bzw. Schließen von Wehren, Dämmen, Schleusen und gegebenenfalls das Anheben von Turbinen-Generator-Einheiten (2) bzw. Turbinen-Generator-Module (3) ermittelt bzw. berücksichtigt werden.

21. Verfahren nach Anspruch 19 oder 20, **dadurch gekennzeichnet, dass** in dem mathematischen Modell zusätzlich Eingaben des Bedienpersonals, gespeicherte Erfahrungswerte, physikalische Gesetzmäßigkeiten, wie z.B. die verdunstende oder versickernde Wassermenge, etc., und aktuelle bzw. vorausschauende meteorologische Daten, wie z.B. zu erwartende Regenfälle, Temperaturvorhersagen, etc., berücksichtigt werden.

22. Verfahren nach einem der Ansprüche 1 bis 21, **dadurch gekennzeichnet, dass** der Pegelstand (P) der Stauanlage (1) über einen vorbestimmten Zeitraum, z.B. 1 Jahr, vorgegeben wird und diese Vorgabe, insbesondere als Sollwert, für die Regelung herangezogen wird.

23. Verfahren nach einem der Ansprüche 1 bis 22, **dadurch gekennzeichnet, dass** die zu erzeugende Energie über einen bestimmten Zeitbereich, vorzugsweise einem Tag, vorgegeben wird und der Pegelstand (P) so geregelt wird, dass der vorgegebene Energieerzeugungsverlauf möglichst genau eingehalten wird.

24. Verfahren nach einem der Ansprüche 1 bis 23, **dadurch gekennzeichnet, dass** die Turbinen-Generator-Einheiten (2) oder Turbinen-Generator-Module (3) zur Freigabe des Strömungsquerschnittes angehoben werden.

25. Verfahren nach einem der Ansprüche 1 bis 24, **dadurch gekennzeichnet, dass** die Pegelstände einer oder mehrerer Stauanlagen von einem zentralen Kontrollzentrum aus geregelt werden.

26. Verfahren nach einem der Ansprüche 1 bis 25, **dadurch gekennzeichnet, dass** der Sollwert für den Pegelstand (P) für einen Zweck, der nicht der Energiegewinnung dient, vorgegeben wird, z.B. für Schifffahrt, Bewässerung, etc.

27. Verfahren nach einem der Ansprüche 1 bis 26, **dadurch gekennzeichnet, dass** an einer Stauanlage zumindest 10, vorzugsweise 20 bis 500 zu- bzw. wegschaltbaren Turbinen-Generator-Einheiten (2) eingesetzt werden.

28. Anlage zum Regeln des Pegelstandes (P) einer Stauanlage (1), vorzugsweise ein Staudamm oder ein Stauwehr, mit einer Mehrzahl von Turbinen-Generator-Einheiten (2), die übereinander und/oder nebeneinander angeordnet und miteinander zu einem oder mehreren Turbinen-Generator-Modulen (3) verbunden sind und gegebenenfalls eine vorbestimmte Anzahl von Turbinen-Generator-Modulen (3) nebeneinander angeordnet und an der Stauanlage (1) abgestützt sind, wobei eine Einrichtung zum Zu- bzw. Wegschalten von einzelnen oder mehreren Turbinen-Generator-Einheiten (2) oder Turbinen-Generator-Modulen (3) vorgesehen ist, mittels welcher der Pegelstand (P) der Stäuanlage (1) zumindest teilweise regelbar ist, und wobei durch das Zu- bzw. Wegschalten die durch die Stauanlage fließende Durchflussmenge in diskreten Schritten, die der durch eine bzw. mehrere Turbinen-Generator-Einheit (2) fließbaren Durchflussmenge entsprechen, einstellbar ist.

29. Einrichtung nach Anspruch 28, **dadurch gekennzeichnet, dass** die zuschaltbaren Turbinen-Generator-Einheiten (2) für einen Betrieb mit im wesentlichen konstanter Durchflussmenge bzw. mit konstanter Leistung ausgelegt sind.

30. Anlage nach Anspruch 28 oder 29, **dadurch gekennzeichnet, dass** der Pegelstand (P) zumindest teilweise durch eine Einrichtung zum Öffnen bzw. Schließen zumindest einer Wehranlage regelbar ist.

31. Anlage nach einem der Ansprüche 28 bis 30, **dadurch gekennzeichnet, dass** die Stauanlage (1) eine Mehrzahl von Pfeilern (4) aufweist, zwischen welchen das Medium vorbeiströmen kann, wobei zwischen zwei benachbarten Pfeilern (4) eine vorbestimmte Anzahl von Turbinen-Generator-Einheiten (2) oder Turbinen-Generator-Modulen (3) angeordnet und an den Pfeilern (4) abgestützt sind.

32. Anlage nach Anspruch 31, **dadurch gekennzeichnet, dass** die Einrichtung zum Zu- bzw. Wegschalten von Turbinen-Generator-Einheiten (2) oder Turbinen-Generator-Modulen (3) in den Einheiten oder Modulen integriert angeordnet und über die Einheit oder das Modul an den Pfeilern abgestützt ist.

33. Anlage nach Anspruch 32, **dadurch gekennzeichnet, dass** die Einrichtung zum Zu- bzw. Wegschalten von Turbinen-Generator-Einheiten (2) oder Turbinen-Generator-Modulen (3) direkt an den Pfeilern abgestützt ist.

34. Anlage nach einem der Ansprüche 28 bis 33, **dadurch gekennzeichnet, dass** die Turbinen-Generator-Einheiten (2) und/oder Turbinen-Generator-Module (3) heb- und senkbar angeordnet sind.

35. Anlage nach einem der Ansprüche 28 bis 34, **dadurch gekennzeichnet, dass** ein zentrales Kontrollzentrum vorgesehen ist, von dem aus der Pegelstand (P) einer oder mehrerer Stauanlagen (1) regelbar ist.

36. Anlage nach einem der Ansprüche 28 bis 35, **dadurch gekennzeichnet, dass** die Stauanlage (1) ein Damm zu Regulierung eines Schifffahrtsweges ist.

37. Anlage nach einem der Ansprüche 28 bis 35, **dadurch gekennzeichnet, dass** die Stauanlage (1) ein Trinkwasserreservoir ist.

38. Anlage nach einem der Ansprüche 28 bis 35, **dadurch gekennzeichnet, dass** die Stauanlage (1) ein Bewässerungsdamm ist.

39. Anlage nach einem der Ansprüche 28 bis 35, **dadurch gekennzeichnet, dass** die Stauanlage (1) ein Hochwasserrückhaltebecken ist.

40. Anlage nach einem der Ansprüche 28 bis 35, **dadurch gekennzeichnet, dass** die Stauanlage (1) eine Staustufe eines Flusskraftwerkes ist.

## Claims

1. Process for controlling the water level (P) of a dam plant (1), preferably a dam or retaining weir, where a number of turbine-generator units (2) are located in the dam plant (1), preferably with an output between 100 kW and 1000 kW, these turbine-generator units (2) being arranged above each other and/or beside each other at least in sections, and are connected with each other to form one or several turbine-generator modules (3) and the water level (P) is controlled to a selectable setpoint value by switching on or off single or several turbine-generator units (2) of a turbine-generator module (3) and/or turbine-generator modules (3), wherein a flow rate through the dam plant (1) is adjusted in discrete steps and a discrete step corresponds to the flow rate that can flow through one or several turbine-generator units (2).

2. Process according to Claim 1, **characterized in that** the switched-on turbine-generator units (2) are operated at an essentially constant flow rate or constant output.

3. Process according to Claim 1 or 2, **characterized in that** the water level (P) is controlled at least partially by dosing or opening an additional weir system.

4. Process according to one of the Claims 1 to 3, **characterized in that** - when the preset high turbine switching level (TsP_{O}) is reached - turbine-generator units (2) or turbine-generator modules (3) are switched on and/or weir systems are opened.

5. Process according to one of the Claims 1 to 4, **characterized in that** - when a preset high alarm level (AP_{O}) is reached - a weir system is opened and/or turbine-generator units (2) or turbine-generator modules (3) are switched on.

6. Process according to Claim 4 or 5, **characterized in that** first all turbine-generator units (2) or turbine-generator modules (3) are switched on and weir systems are opened only afterwards.

7. Process according to one of the Claims 1 to 6, **characterized in that** - when a preset low turbine switching level (TsPᵤ) is reached - turbine-generator units (2) or turbine-generator modules (3) are switched off and/or weir systems are dosed.

8. Process according to one of the Claims 1 to 7, **characterized in that** - when a preset low alarm level (APᵤ) is reached - weir systems are dosed and/or turbine-generator units (2) or turbine-generator modules (3) are switched off.

9. Process according to Claim 7 or 8, **characterized in that** all weir systems are dosed first and the turbine-generator units (2) or turbine-generator modules (3) are switched off only afterwards.

10. Process according to one of the Claims 4 to 9, **characterized in that** - when a preset turbine switching level (TsPₒ, TsPᵤ) and/or alarm level (APₒ, APᵤ) is reached - an alarm signal, preferably an acoustic or visual signal, is generated and/or displayed.

11. Process according to Claim 10, **characterized in that** by the release of an alarm, automatic switching actions for switching on or off turbine-generator units (2) or turbine-generator modules (3) and/or opening or dosing of weir systems are initiated.

12. Process according to one of the Claims 1 to 11, **characterized in that** a forecast on the future water level (P) that is to be expected is made and that depending on this forecast, turbine-generator units (2) or turbine-generator modules (3) are switched on or off and/or weir systems are opened or dosed.

13. Process according to one of the Claims 1 to 12, **characterized in that** the control of the water levels (P) of several successive dam plants (1) is coupled with each other and controlled by a superordinate control such that the water levels (P) of these dam plants (1) are optimized in mutual consideration of each other.

14. Process according to one of the Claims 1 to 13, **characterized in that** the number of turbine-generator units (2) or turbine-generator modules (3) is pre-determined and can be switched on or off essentially at the same time.

15. Process according to Claim 14, **characterized in that** the number of the turbine-generator units (2) or turbine-generator modules (3) is determined according to the energy requirement in each case.

16. Process according to Claim 12 and Claim 14, **characterized in that** the number of turbine-generator units (2) or turbine-generator modules (3) that are switched on or off is determined according to an expected future water level (P) and an expected future energy requirement.

17. Process according to one of the Claims 1 to 16, **characterized in that** the control of the water level (P) is optimized with regard to energy generation.

18. Process according to Claim 17, **characterized in that** the optimization of the energy generation is carried out on the basis of a mathematical model.

19. Process according to Claim 18, **characterized in that** the optimum number of turbine-generator units (2) or turbine-generator modules (3) that are switched on or off is determined according to the mathematical model, taking the present and/or expected future inlet or outlet flow rate and the present and/or expected future energy requirement into account.

20. Process according to Claim 19, **characterized in that** temporary opening or dosing of weirs, dams, locks and possibly the raising of turbine-generator units (2) or turbine-generator modules (3) are determined according to the mathematical model, and/or taken into account.

21. Process according to Claim 19 or 20, **characterized in that** additional entries by the operating personnel, stored empirical values, physical conditions such as the water quantity evaporated or oozed away, etc., as well as current, or forecasts of, meteorological data, e.g., rainfall, temperature variations, etc., are taken into account in the mathematical model.

22. Process according to one of the Claims 1 to 21, **characterized in that** the water level (P) of a dam plant (1) is pre-determined for a given time, e.g., one year, and that this pre-determination is used for the control, especially as a setpoint value.

23. Process according to one of the Claims 1 to 22, **characterized in that** the energy to be produced over a certain time period, preferably one day, is pre-determined, and the water level (P) is controlled such that the pre-determined course of energy generation is observed as closely as possible.

24. Process according to one of the Claims 1 to 23, **characterized in that** the turbine-generator units (2) or turbine-generator modules (3) are raised in order to dear the flow cross section.

25. Process according to one of the Claims 1 to 24, **characterized in that** the water levels of one or several dam plants (1) are controlled from a central control room.

26. Process according to one of the Claims 1 to 25, **characterized in that** the setpoint value for the water level (P) is preset for a purpose that does not serve energy generation but another purpose, e.g. ship navigation, irrigation, etc.

27. Process according to one of the Claims 1 to 26, **characterized in that** at least ten, preferably 20 to 500 turbine-generator units (2) that can be switched on and off are used.

28. Plant for controlling the water level (P) of a dam plant (1), preferably a dam or retaining weir, with a multiplicity of turbine-generator units (2), which are arranged above each other and/or beside each other at least in sections, and are connected with each other to form one or several turbine-generator modules (3) and where possibly a preset number of turbine-generator modules (3) are arranged beside each other and supported by the dam plant (1), wherein a device is foreseen to switch on or off single or several turbine-generator units (2) or turbine-generator modules (3), with which the water level (P) of the weir system can be controlled at least partly, and wherein, by switching on and off, the flow rate flowing through the dam plant (1) can be controlled in discrete steps, which correspond to the flow rate that can flow through one or several turbine generator units (2).

29. Device according to Claim 28, **characterized in that** the turbine-generator units (2) are essentially designed for operation at a constant flow rate or output.

30. Plant according to Claim 28 or 29, **characterized in that** the water level (P) can be controlled at least partially by means of a device for opening or dosing at least one weir system.

31. Plant according to one of the Claims 28 to 30, **characterized in that** the dam plant (1) has a multiplicity of pillars (4) through which the medium can flow, with a pre-determined number of turbine-generator units (2) or turbine-generator modules (3) being arranged between two pillars (4) and supported on the pillars (4).

32. Plant according to Claim 31, **characterized in that** the device for the switching on and off of the turbine-generator units (2) or turbine-generator modules (3) is integrated in the units and supported on the pillars (4) via the unit or module.

33. Plant according to Claim 32, **characterized in that** the device for the switching on and off of the turbine-generator units (2) or turbine-generator modules (3) is directly supported on the pillars (4).

34. Plant according to one of the Claims 28 to 33, **characterized in that** the turbine-generator units (2) and/or turbine-generator modules (3) are arranged so that they can be raised and lowered.

35. Plant according to one of the Claims 28 to 34, **characterized in that** a central control room is foreseen from which the water level (P) of one or several dam plants (1) can be controlled.

36. Plant according to one of the Claims 28 to 35, **characterized in that** the dam plant (1) is a dam for regulating a ship navigation path.

37. Plant according to one of the Claims 28 to 35, **characterized in that** the dam plant (1) is a drinking water reservoir.

38. Plant according to one of the Claims 28 to 35, **characterized in that** the dam plant (1) is an irrigation dam.

39. Plant according to one of the Claims 28 to 35, **characterized in that** the dam plant (1) is a flood control reservoir.

40. Plant according to one of the Claims 28 to 35, **characterized in that** the dam plant (1) is a barrage weir with lock in a run-off river power station.

## Revendications

1. Procédé de régulation du niveau d'eau (P) d'une installation de barrage (1), de préférence d'un barrage ou barrage de retenue, où un certain nombre d'unités turbine-générateur (2) est disposé dans l'installation de barrage (1), de préférence avec un rendement entre 100 kW et 1000 kW, ces unités turbine-générateur (2) étant disposées l'une au-dessus de l'autre ou l'une à côté de l'autre, au moins en sections, et ces unités sont liées l'une à l'autre pour obtenir un ou plusieurs modules turbine-générateur (3) et le niveau d'eau (P) est réglé à un seuil déterminable en embranchant ou débranchant certaines des ou plusieurs unités turbine-générateur (2) d'un module (3) turbine-générateur et/ou de modules turbine-générateur (3), où un débit à travers l'installation de barrage (1) est ajusté par étapes discrètes et une étape discrète correspond aux débits pouvant couler à travers une ou plusieurs unités turbine-générateur (2).

2. Procédé selon la revendication 1, **caractérisé en ce que** les unités turbine-générateur (2) embranchées sont exploitées à un débit essentiellement constant ou un rendement constant.

3. Procédé selon la revendication 1 ou 2, **caractérisé en ce que** le niveau d'eau (P) est réglé au moins partiellement par la fermeture ou l'ouverture d'un système de retenue supplémentaire.

4. Procédé selon l'une des revendications 1 à 3, **caractérisé en ce que** - à l'obtention d'un haut niveau d'embranchement turbine présélectionné (TsPₒ) - des unités turbine-générateur (2) ou modules turbine-générateur (3) sont embranchés et/ou des systèmes de retenue sont ouverts.

5. Procédé selon l'une des revendications 1 à 4, **caractérisé en ce que** - à l'obtention d'un haut niveau d'alarme présélectionné (APₒ) - un système de retenue est ouvert et/ou des unités turbine-générateur (2) ou modules turbine-générateur (3) sont embranchés.

6. Procédé selon la revendication 4 ou 5, **caractérisé en ce que** toutes les unités turbine-générateur (2) ou modules turbine-générateur (3) sont embranchées d'abord et les systèmes de retenue ne sont embranchés que par la suite.

7. Procédé selon l'une des revendications 1 à 6, **caractérisé en ce que** - à l'obtention d'un bas niveau d'embranchement turbine présélectionné (TsPᵤ) - des unités turbine-générateur (2) ou modules turbine-générateur (3) sont débranchés et/ou des systèmes de retenue sont fermés.

8. Procédé selon l'une des revendications 1 à 7, **caractérisé en ce que** - à l'obtention d'un bas niveau d'alarme présélectionné (APᵤ) - des systèmes de retenue sont fermé et/ou des unités turbine-générateur (2) ou modules turbine-générateur (3) sont débranchés.

9. Procédé selon la revendication 7 ou 8, **caractérisé en ce que** tous les systèmes de retenue sont fermés et les unités turbine-générateur (2) ou modules turbine-générateur (3) ne sont débranchés qu'après.

10. Procédé selon l'une des revendications 4 à 9, **caractérisé en ce que** - à l'obtention d'un haut niveau d'embranchement de turbine présélectionné (TsPₒ, ToPᵤ) et/ou niveau d'alarme (APₒ, APᵤ) - un signal d'alarme, de préférence un signal acoustique ou visuel, est généré, et/ou affiché.

11. Procédé selon la revendication 10, **caractérisé en ce que** par un alarme des actions d'embranchement automatiques pour l'embranchement d'unités turbine-générateur (2) ou modules turbine-générateur (3) et/ou l'ouverture ou la fermeture de systèmes de retenue sont enclenchés.

12. Procédé selon l'une des revendications 1 à 11, **caractérisé en ce qu'**un pronostic du niveau d'eau (P) futur à attendre est fait et que des unités turbine-générateur (2) ou modules turbine-générateur (3) sont débranchés et/ou des systèmes de retenue sont ouverts ou fermés, en fonction de ce pronostic.

13. Procédé selon l'une des revendications 1 à 12, **caractérisé en ce que** la régulation du niveau d'eau (P) de plusieurs installations de barrage (1) successives est couplée l'une à l'autre et contrôlé par un contrôle maître, de sorte que les niveaux d'eau (P) de ces installations de barrage (1) sont optimalisés en considération mutuelle.

14. Procédé selon l'une des revendications 1 à 13, **caractérisé en ce que** le nombre d'unités turbine-générateur (2) ou modules turbine-générateur (3) est prédéterminé et peut être embranché ou débranché essentiellement en même temps.

15. Procédé selon la revendication 14, **caractérisé en ce que** le nombre d'unités turbine-générateur (2) ou modules turbine-générateur (3) est déterminé selon la demande énergétique le cas échéant.

16. Procédé selon la revendication 12 et 14, **caractérisé en ce que** le nombre d'unités turbine-générateur (2) ou modules turbine-générateur (3) qui sont embranchés ou débranchés est déterminé selon un niveau d'eau (P) futur attendu et une demande énergétique future attendue.

17. Procédé selon l'une des revendications 1 à 16, **caractérisé en ce que** le contrôle du niveau d'eau (P) est optimalisé à l'égard de la génération d'énergie.

18. Procédé selon la revendication 17, **caractérisé en ce que** l'optimisation de la génération d'énergie se fait sur la base d'un modèle mathématique.

19. Procédé selon la revendication 18, **caractérisé en ce que** le nombre optimum d'unités turbine-générateur (2) ou modules turbine-générateur (3) qui sont embranchés ou débranchés est déterminé selon le modèle mathématique, en prenant compte du courant d'entrée et de sortie présent et/ou futur attendu et de la demande énergétique présente et/ou future.

20. Procédé selon la revendication 19, **caractérisé en ce que** l'ouverture ou la fermeture des de retenues, barrages, écluses et possiblement le levage des unités turbine-générateur (2) ou modules turbine-générateur (3) sont déterminée selon le modèle mathématique et/ou prise en compte.

21. Procédé selon la revendication 19 ou 20, **caractérisé en ce que** des entrées supplémentaires effectuées par le personnel de service, des valeurs mémorisées empiriques, des conditions physiques telles que la quantité d'eau évaporée ou ayant filtré etc., ainsi que les données météorologiques, p. ex. la pluie, des variations de température, etc., sont prises en compte dans le modèle mathématique.

22. Procédé selon l'une des revendications 1 à 21, **caractérisé en ce que** le niveau d'eau (P) d'une installation de barrage (1) est prédéterminé pour un temps donné, p. exemple une année, et que cette prédétermination est appliquée au réglage, surtout en tant que seuil.

23. Procédé selon l'une des revendications 1 à 22, **caractérisé en ce que** l'énergie à produire pendant une certaine période, de préférence un jour, est prédéterminée, et le niveau d'eau (P) est réglé de sorte que la course de génération d'énergie soit observée aussi près que possible.

24. Procédé selon l'une des revendications 1 à 23, **caractérisé en ce que** les unités turbine-générateur (2) ou modules turbine-générateur (3) sont relevées pour évider les sections transversales.

25. Procédé selon l'une des revendications 1 à 24, **caractérisé en ce que** les niveaux d'eau d'une ou de plusieurs installations de barrage (1) sont réglés à partir d'un centre de contrôle.

26. Procédé selon l'une des revendications 1 à 25, **caractérisé en ce que** le seuil du niveau d'eau (P) est déterminé pour un but autre que la génération d'énergie, p. ex, la navigation, l'irrigation, etc.

27. Procédé selon l'une des revendications 1 à 26, **caractérisé en ce qu'**au moins dix, de préférence 20 à 500, unités turbine-générateur (2) peuvent être embranchées et débranchées.

28. Installation de régulation du niveau d'eau (P) d'une installation de barrage (1), de préférence d'un barrage ou barrage de retenue, avec une multiplicité d'unités turbine-générateur (2) étant disposée l'une au-dessus de l'autre et/ou l'une à côté de l'autre, au moins en sections, et liée l'une à l'autre pour obtenir un ou plusieurs modules turbine-générateur (3) et où un certain nombre présélectionné de modules turbine-générateur (3) est disposé l'un à côté de l'autre et supporté sur les installations de barrage (1), où un dispositif est prévu pour l'embranchement et le débranchement de certaines des ou plusieurs unités turbine-générateur (2) ou modules turbine-générateur (3) pour régler le niveau d'eau (P) des systèmes de retenue au moins partiellement, et où, par le branchement et le débranchement, le débit à travers l'installation de barrage (1) peut être réglé par étapes discrètes et une étape discrète correspond aux débits pouvant couler à travers une ou plusieurs unités turbine-générateur (2).

29. Dispositif selon la revendication 28, **caractérisé en ce que** les unités turbine-générateur (2) sont essentiellement étudiées pour un fonctionnement à débit ou rendement constant.

30. Installation selon la revendication 28 ou 29, **caractérisée en ce que** le niveau d'eau (P) peut être contrôlé au moins partiellement moyennant un dispositif d'ouverture ou de fermeture d'un système de retenue.

31. Installation selon l'une des revendications 28 à 30, **caractérisée en ce que** l'installation de barrage (1) a une multiplicité de piliers (4) à travers desquels le medium peut couler, avec un nombre prédéterminé d'unités turbine-générateur (2) ou modules turbine-générateur (3) disposé entre deux piliers (4) et supporté sur les piliers (4).

32. Installation selon la revendication 31, **caractérisée en ce que** le dispositif d'embranchement et de débranchement des unités turbine-générateur (2) ou modules turbine-générateur (3) est intégré dans les unités et supporté sur les piliers (4) via l'unité ou le module.

33. Installation selon la revendication 32, **caractérisée en ce que** le dispositif d'embranchement et de débranchement pour les unités turbine-générateur (2) ou modules turbine-générateur (3) est directement supporté sur les piliers (4).

34. Installation selon l'une des revendications 28 à 33, **caractérisée en ce que** les unités turbine-générateur (2) et/ou modules turbine-générateur (3) sont disposés de sorte qu'ils puissent être relevés ou abaissés.

35. Installation selon l'une des revendications 28 à 34, **caractérisée en ce qu'**un centre de contrôle est prévu, à partir duquel le niveau d'eau (P) d'une seule ou de plusieurs installations de barrage (1) peut être réglé.

36. Installation selon l'une des revendications 28 à 35, **caractérisée en ce que** l'installation de barrage (1) est un barrage de réglage d'une route de navigation.

37. Installation selon l'une des revendications 28 à 35, **caractérisée en ce que** l'installation de barrage (1) est un réservoir d'eau potable.

38. Installation selon l'une des revendications 28 à 35, **caractérisée en ce que** l'installation de barrage (1) est un barrage d'irrigation.

39. Installation selon l'une des revendications 28 à 35, **caractérisée en ce que** l'installation de barrage (1) est un bassin de retenue d'eau de crue.

40. Installation selon l'une des revendications 28 à 35, **caractérisée en ce que** l'installation de barrage (1) est un barrage de retenue avec écluse dans une usine à fil de l'eau.
